# DEMANDE DE BREVET EUROPEEN

(11) **EP 3 410 579 A1**
(43) Date de publication de la demande: **05.12.2018**
(21) Numéro de dépôt: 18173729.7
(22) Date de dépôt: 23.05.2018
(51) Int. Cl.: H02K 5/173, F16C 35/073, F16H 57/039, H02K 7/08, H02K 7/116, F16H 57/021

(54) **MOTO-REDUCTEUR POUR SYSTEME D ESSUYAGE DE VEHICULE AUTOMOBILE**

(30) Priorité: 02.06.2017 FR 1754892
(71) Demandeur: Valeo Systèmes d'Essuyage, 78322 Le Mesnil Saint Denis (FR)
(72) Inventeur: HERRADA, Jose-Luis, 78322 LE MESNIL SAINT DENIS (FR)
(74) Mandataire: Valeo Systèmes d'Essuyage

(57) **Abrégé**

L'invention concerne un moto-réducteur pour système d'essuyage de véhicule automobile, comportant un moteur électrique à courant continu, notamment sans balais, le moteur électrique (2) comprenant un stator (4) et un rotor (5), le stator (4) comprenant une pluralité de bobines d'excitation électromagnétique (6) du rotor (5) et le rotor (5) comprenant un aimant monté pour être animé d'un mouvement de rotation autour d'un axe de rotation, le moto-réducteur (1) comprenant également un arbre de rotation (8), dit arbre moteur, configuré pour être entraîné en rotation par le rotor (4), le moto-réducteur (1) comprenant un roulement (20) de guidage en rotation de l'arbre moteur (8) et une entretoise (25) de blocage axial du roulement (20) rapportée sur l'arbre moteur, l'entretoise (25) étant fixée sur l'arbre moteur (8).

## Description

L'invention a pour objet un moto-réducteur pour système d'essuyage de véhicule automobile.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balai qui présentent de nombreux avantages comme une grande durée de vie, un encombrement et une consommation réduits ainsi qu'un faible niveau sonore.

La commande des moteurs électriques est plus complexe par rapport aux moteurs électriques à balais car pour permettre un bon fonctionnement, il est nécessaire de connaître précisément la position angulaire du rotor du moteur électrique à courant continu sans balai.

De tels moteurs électriques comprennent des bobines d'excitation électromagnétique disposées au niveau du stator et alimentées alternativement via un onduleur pour permettre l'entraînement du rotor.

Le rotor est monté pour être animé d'un mouvement de rotation autour d'un axe de rotation et entraîne en rotation un arbre, dit arbre moteur, du moto-réducteur.

Afin d'optimiser le fonctionnement du moto-réducteur, il est connu de prévoir au moins un roulement pour guider le mouvement de rotation de l'arbre moteur.

Un tel roulement comprend une bague intérieure et une bague extérieure séparées par une cage munie d'éléments roulants, les mouvements de la bague intérieure étant découplés de ceux de la bague extérieure.

Il est préférable de bloquer le roulement pour qu'il puisse résister à des forces axiales s'exerçant au cours de la rotation de l'arbre moteur.

Une solution envisagée consiste à souder la bague intérieure à l'arbre moteur.

Néanmoins, cette solution présente de nombreux inconvénients puisque, non seulement, un roulement est souvent en acier, et, par conséquent, difficile à souder, mais de surcroît, l'augmentation de chaleur nécessaire au soudage marque les éléments roulants sur les bagues.

Un tel marquage conduit irrémédiablement à un fonctionnement défectueux du roulement, et par conséquent, à un fonctionnement défectueux du moto-réducteur.

L'invention vise à améliorer la situation.

A cet effet, l'invention a pour objet un moto-réducteur pour système d'essuyage de véhicule automobile, comportant un moteur électrique à courant continu, notamment sans balais, le moteur comprenant un stator et un rotor, le stator comprenant une pluralité de bobines d'excitation électromagnétique du rotor et le rotor comprenant un aimant monté pour être animé d'un mouvement de rotation autour d'un axe de rotation, le moto-réducteur comprenant également un arbre de rotation, dit arbre moteur, configuré pour être entraîné en rotation par le rotor, le moto-réducteur comprenant un roulement de guidage en rotation de l'arbre moteur et une entretoise de blocage axial du roulement rapportée sur l'arbre moteur, l'entretoise étant fixée sur l'arbre moteur.

Ainsi, grâce au moto-réducteur selon la présente invention, le roulement est bloqué par l'intermédiaire de l'entretoise, elle-même fixée à l'arbre moteur.

Pour fixer l'entretoise à l'arbre moteur, il est alors possible de prévoir une déformation, par exemple mécanique ou thermique de l'arbre moteur et/ou de l'entretoise, le roulement restant quant à lui intact.

Selon une autre caractéristique de l'invention, l'entretoise est une bague.

Selon une autre caractéristique de l'invention, l'entretoise est sertie ou soudée ou collée ou rivetée ou montée par ajustement serré sur l'arbre moteur.

Selon une autre caractéristique de l'invention, l'arbre moteur comprend une gorge de réception de la bague formant l'entretoise, la bague étant comprimée élastiquement et maintenue en position dans la gorge.

Selon une autre caractéristique de l'invention, le roulement comprend une bague intérieure et une bague extérieure, l'entretoise étant disposée contre la bague intérieure du roulement.

Selon une autre caractéristique de l'invention, le moto-réducteur comprend un anneau élastique de retenue du roulement disposé contre la bague intérieure du roulement, d'un côté opposé à l'entretoise.

Selon une autre caractéristique de l'invention, le moto-réducteur comprend une deuxième entretoise disposée contre la bague intérieure du roulement, du côté opposé à la première entretoise, la deuxième entretoise étant fixée sur l'arbre moteur.

Selon une autre caractéristique de l'invention, le roulement est disposé à proximité d'une extrémité de l'arbre moteur.

L'invention a également pour objet un procédé de fabrication d'un moto-réducteur pour système d'essuyage de véhicule automobile, comportant un moteur électrique à courant continu, notamment sans balais, le moteur comprenant un stator et un rotor, le stator comprenant une pluralité de bobines d'excitation électromagnétique du rotor et le rotor comprenant un aimant monté pour être animé d'un mouvement de rotation autour d'un axe de rotation, le moto-réducteur comprenant également un arbre de rotation, dit arbre moteur, configuré pour être entraîné en rotation par le rotor, le moto-réducteur comprenant un roulement de guidage en rotation de l'arbre moteur et une entretoise de blocage axial du roulement rapportée sur l'arbre moteur, le procédé comprenant une étape de déformation mécanique ou thermique de l'arbre moteur et/ou de l'entretoise de sorte à fixer l'entretoise sur l'arbre moteur.

L'invention a également pour objet un système d'essuyage pour véhicule automobile, comprenant un moto-réducteur tel que décrit précédemment.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective d'un moto-réducteur électrique selon la présente invention ; et
- les figures 2 à 9 illustrent un arbre moteur muni d'une entretoise selon huit variantes de réalisation.

### Moto-réducteur

L'invention a pour objet un moto-réducteur pour un système d'essuyage de véhicule automobile, référencé 1.

Le moto-réducteur comprend un moteur électrique à courant continu, de préférence sans balais, 2, et un mécanisme réducteur 3.

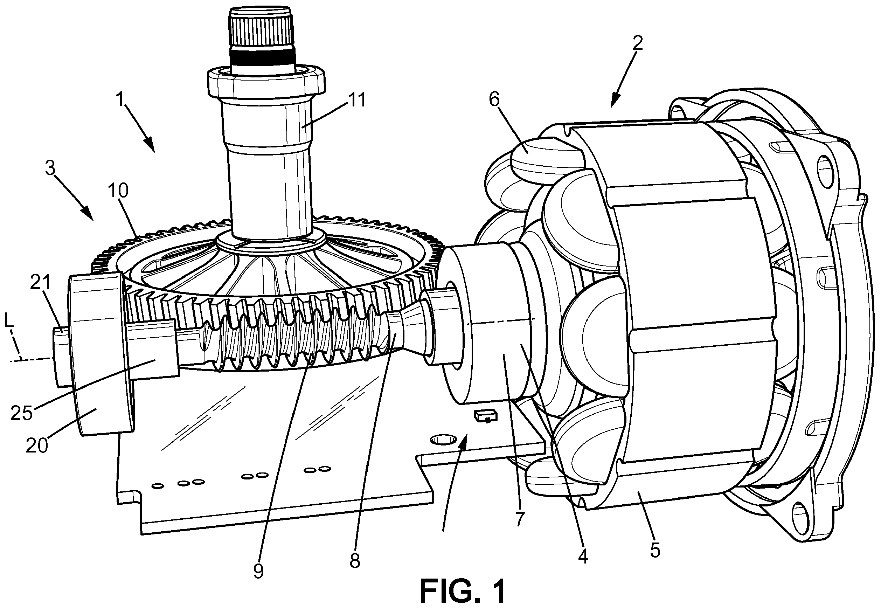

Comme visible sur la figure 1, le moteur électrique 2 comporte un rotor 4 et un stator 5.

Le stator 5 comprend une pluralité de bobines d'excitation électromagnétique 6 du rotor 4.

Le rotor 4 comprend un aimant multipolaire 7 monté pour être animé d'un mouvement de rotation autour d'un axe de rotation, référencé L.

Le moteur électrique 2 est configuré pour que le rotor 4 tourne dans le stator 5, ce qui entraine une rotation d'un arbre 8 du mécanisme 3, dit arbre moteur, 8, solidaire du rotor 4.

L'arbre moteur 8 s'étend selon l'axe de rotation L.

L'arbre moteur 8 comprend une partie filetée 9 montée pour être engrenée par une roue dentée 10 du mécanisme réducteur 3.

La roue dentée 10 entraîne en rotation un arbre de sortie 11.

Ainsi, la vitesse de rotation en sortie du moto-réducteur (c'est-à-dire la vitesse de rotation de l'arbre de sortie 11) est plus faible que la vitesse de rotation de l'arbre moteur 8.

L'arbre de sortie 11 est sensiblement perpendiculaire à l'arbre moteur 8.

Comme il ressort des figures, un roulement 20 assure le guidage de l'arbre moteur à l'une des extrémités 21, 22, de l'arbre moteur 8, côté opposé au moteur électrique 2.

Le roulement comprend, comme il est connu de l'homme du métier, une bague intérieure 24 et une bague extérieure 23 séparées par une cage munie d'éléments roulants, les bagues intérieure et extérieure étant découplées l'une de l'autre.

Sur les figures, la bague intérieure 24 étant illustrée en pointillés.

Comme visible sur les figures 1 à 9, le moto-réducteur 1 comprend une entretoise 25 de blocage axial du roulement 20.

L'entretoise 25 est rapportée sur l'arbre moteur 8.

Comme visible sur les figures, l'entretoise 25 est une bague, emmanchée sur l'arbre moteur 8.

L'entretoise 25 est fixée sur l'arbre moteur 8, comme il va être détaillé.

Avantageusement, l'entretoise 25 a subi une déformation mécanique ou thermique pour être fixée à l'arbre moteur.

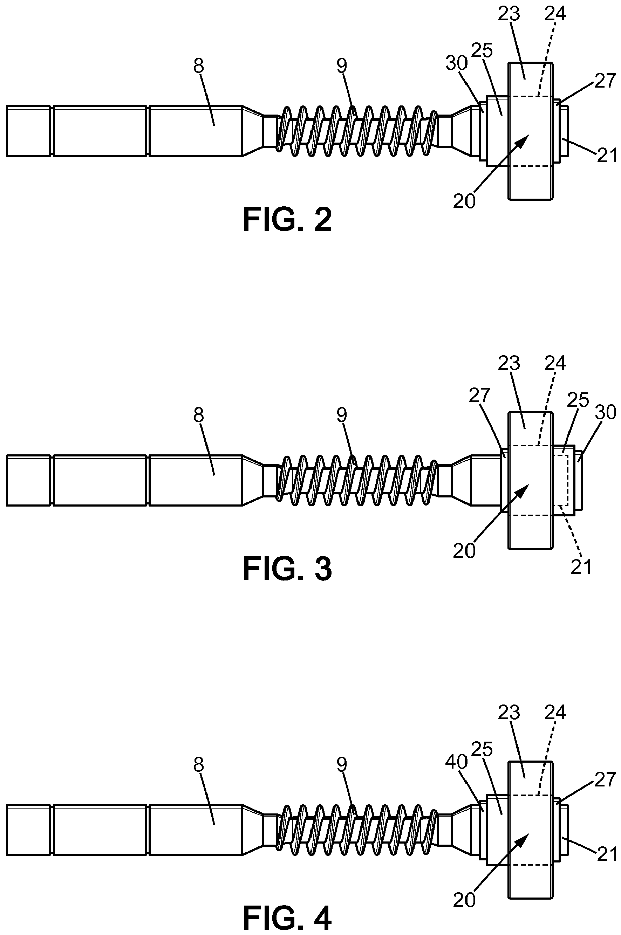

C'est le cas selon un premier mode de réalisation, illustré aux figures 2 et 3, où l'entretoise a subi une déformation mécanique lors d'une opération de sertissage. L'entretoise 25 est sertie sur l'arbre moteur 8 (cf. référence 30).

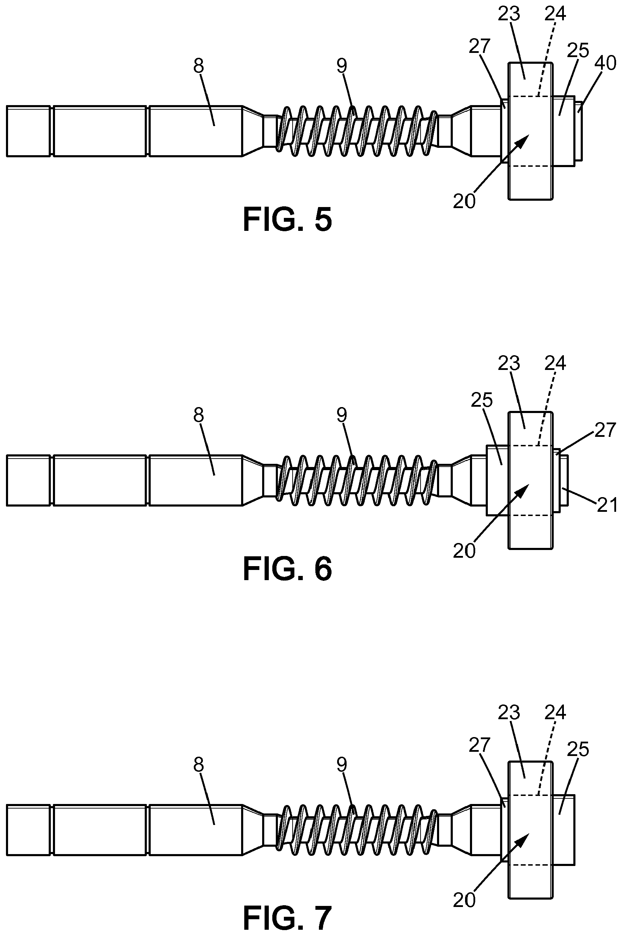

C'est le cas selon un deuxième mode de réalisation, illustré aux figures 4 et 5, où l'entretoise a subi une déformation thermique lors d'une opération de soudage. L'entretoise 25 est dans ce cas soudée sur l'arbre moteur 8 (cf. référence 40).

C'est le cas selon un troisième mode de réalisation, illustré aux figures 6 et 7, où l'entretoise a subi une déformation mécanique lors d'une opération par ajustement serré, par exemple par montage sur presse.

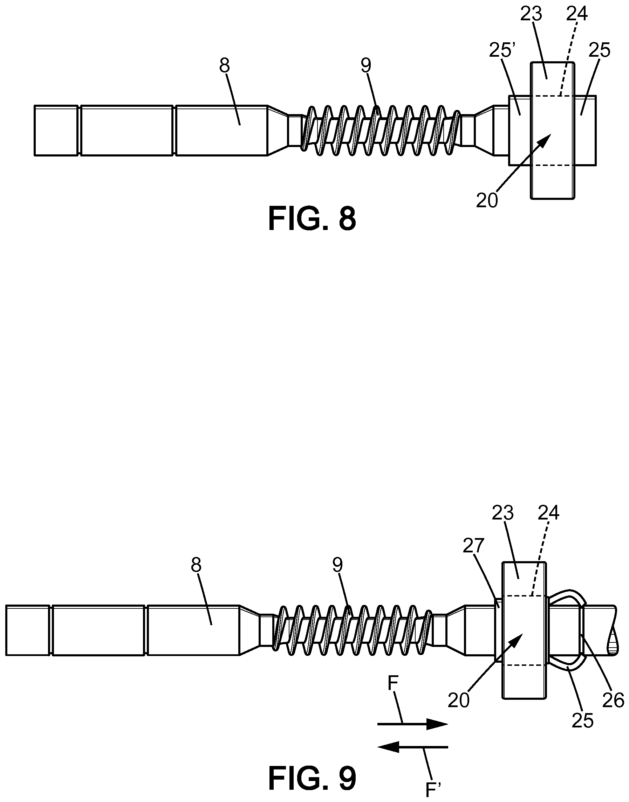

C'est également le cas selon un quatrième mode de réalisation, illustré sur la figure 9, où l'entretoise est comprimée élastiquement et maintenue en position dans une gorge 26 de l'arbre moteur 8.

Selon ce mode de réalisation, l'entretoise est configurée pour que, malgré un effort axial maximal exercé sur l'entretoise 25 dans le sens d'un étirement de l'entretoise (flèche F), ou dans le sens d'une compression de l'entretoise (flèche F'), l'entretoise reste maintenue dans le gorge 26.

C'est encore le cas selon d'autres modes de réalisation, non illustrés, selon lesquels l'entretoise est respectivement rivetée sur l'arbre moteur ou présente un taraudage.

Selon un autre mode de réalisation non illustré, l'entretoise est collée à l'arbre moteur.

On note que, pour tous les modes de réalisation, le roulement ne subit aucune déformation.

Selon tous les modes de réalisation, c'est l'entretoise 25 qui absorbe les efforts axiaux exercés sur le roulement 20 du fait qu'elle est solidement fixée à l'arbre moteur 8.

Le roulement 20 est solidaire en mouvement de l'arbre moteur 8 par l'intermédiaire de l'entretoise 25.

Comme visible sur les figures 3 à 9, l'entretoise 25 est disposée contre la bague intérieure 24 du roulement 20.

Avantageusement, un anneau élastique 27 est disposé contre la bague intérieure 24 du roulement 20, du côté opposé à l'entretoise 25.

De préférence, l'anneau élastique 27 présente une ouverture. Il peut s'agir d'un circlips (marque déposée).

L'anneau élastique 27 est positionné dans une gorge de l'arbre moteur 8.

L'anneau élastique 27 permet de retenir axialement le roulement 20.

L'anneau élastique 27 est illustré aux figures 2 à 7 et 9.

Sur la variante de la figure 8, le moto-réducteur 1 comprend une deuxième entretoise 25' disposée contre la bague intérieure du roulement, du côté opposé à la première entretoise, la deuxième entretoise étant fixée sur l'arbre moteur comme décrit précédemment pour la première entretoise.

L'invention a également pour objet un procédé de fabrication du moto-réducteur 1.

Le procédé comprend une étape de déformation mécanique ou thermique de l'arbre moteur et/ou de l'entretoise de sorte à fixer l'entretoise sur l'arbre moteur, comme déjà décrit.

On note que, bien entendu, l'autre extrémité de l'arbre moteur 8 peut également être munie d'un roulement et d'une ou de deux entretoises 25.

## Revendications

1. Moto-réducteur pour système d'essuyage de véhicule automobile, comportant un moteur électrique à courant continu, notamment sans balais, le moteur électrique (2) comprenant un stator (4) et un rotor (5), le stator (4) comprenant une pluralité de bobines d'excitation électromagnétique (6) du rotor (5) et le rotor (5) comprenant un aimant monté pour être animé d'un mouvement de rotation autour d'un axe de rotation, le moto-réducteur (1) comprenant également un arbre de rotation (8), dit arbre moteur, configuré pour être entraîné en rotation par le rotor (4), le moto-réducteur (1) comprenant un roulement (20) de guidage en rotation de l'arbre moteur (8) et une entretoise (25) de blocage axial du roulement (20) rapportée sur l'arbre moteur, l'entretoise (25) étant fixée sur l'arbre moteur (8).

2. Moto-réducteur selon la revendication 1, dans lequel l'entretoise (25) est une bague.

3. Moto-réducteur selon l'une des revendications 1 ou 2, dans lequel l'entretoise (25) est sertie ou soudée ou collée ou rivetée ou montée par ajustement serré sur l'arbre moteur (8).

4. Moto-réducteur selon la revendication 1, dans lequel l'arbre moteur (8) comprend une gorge (26) de réception de la bague formant l'entretoise (25), la bague étant comprimée élastiquement et maintenue en position dans la gorge (26).

5. Moto-réducteur selon l'une des revendications précédentes, dans lequel le roulement (20) comprend une bague intérieure (24) et une bague extérieure (23), l'entretoise (25) étant disposée contre la bague intérieure (24) du roulement (20).

6. Moto-réducteur selon la revendication précédente, comprenant un anneau élastique (27) de retenue du roulement (20) disposé contre la bague intérieure (24) du roulement (20), d'un côté opposé à l'entretoise (25).

7. Moto-réducteur selon la revendication 5, comprenant une deuxième entretoise (25') disposée contre la bague intérieure (24) du roulement (20), du côté opposé à la première entretoise (25), la deuxième entretoise (25') étant fixée sur l'arbre moteur (8).

8. Moto-réducteur selon l'une des revendications précédentes, dans lequel le roulement (20) est disposé à proximité d'une extrémité (21) de l'arbre moteur (8).

9. Moto-réducteur selon la revendication précédente, comprenant un deuxième roulement à proximité d'une autre extrémité de l'arbre moteur.

10. Procédé de fabrication d'un moto-réducteur pour système d'essuyage de véhicule automobile, comportant un moteur électrique à courant continu, notamment sans balais, le moteur comprenant un stator (2) et un rotor (3), le stator (2) comprenant une pluralité de bobines d'excitation électromagnétique (4) du rotor (3) et le rotor (3) comprenant un aimant monté pour être animé d'un mouvement de rotation autour d'un axe de rotation, le moto-réducteur comprenant également un arbre de rotation, dit arbre moteur (L), configuré pour être entraîné en rotation par le rotor, le moto-réducteur comprenant un roulement de guidage en rotation de l'arbre moteur et une entretoise de blocage axial du roulement rapportée sur l'arbre moteur, le procédé comprenant une étape de déformation mécanique ou thermique de l'arbre moteur et/ou de l'entretoise de sorte à fixer l'entretoise sur l'arbre moteur.

11. Système d'essuyage pour véhicule automobile, comprenant un moto-réducteur selon l'une quelconque des 1 à 9.
